# EUROPEAN PATENT APPLICATION

(11) **EP 4 550 494 A1**
(43) Date of publication of application: **07.05.2025**
(21) Application number: 24189461.7
(22) Date of filing: 18.07.2024
(51) Int. Cl.: H01M 10/04, H01M 50/107, H01M 50/46, H01M 50/474, H01M 10/0587

(54) **ELECTRODE ASSEMBLY AND RECHARGEABLE BATTERY WITH THE SAME**

(30) Priority: 03.11.2023 KR 20230151072
(71) Applicant: SAMSUNG SDI CO., LTD., Giheung-gu Yongin-si, Gyeonggi-do 17084 (KR)
(72) Inventor: Lee, Jeawoan, 17084 Yongin-si, Gyeonggi-do (KR)
(74) Representative: Gulde & Partner

(57) **Abstract**

The application relates to an electrode assembly (100, 100A) including a first electrode assembly (110) having first multiple windings of a first laminate (210), the first laminate (210) including a first electrode (10), a separator (30), and a second electrode (20), a middle portion (120, 160, 170) surrounding the first electrode assembly (110) and a second electrode assembly (130) that surrounds the middle portion (120, 160, 170), the second electrode assembly (130) having second multiple windings of a second laminate (220), the second laminate (220) including a first electrode (40), a separator (60) and a second electrode (50), wherein the middle portion (120, 160, 170) adjusts a gap between the first electrode assembly (110) and the second electrode assembly (130) according to pressure changes, or wherein the first laminate (210) and the second laminate (220) are disposed separately from each other, and the middle portion (120, 160, 170) is integrally connected with one the first laminate (210) or the second laminate (220).

## Description

### BACKGROUND

### 1. Field

The present disclosure relates to a rechargeable battery. More particularly, the present disclosure relates to an electrode assembly of a cylindrical battery.

### 2. Description of the Related Art

A rechargeable battery is used for a variety of purposes, such as powering a small electronic device such as a mobile phone and a laptop computer, and powering a motor for a transportation vehicle such as an electric vehicle and a hybrid vehicle. In the latter case, a battery module system combining a plurality of cylindrical rechargeable batteries can be used, and in this case, cylindrical rechargeable batteries are trending to enlarge a diameter of the electrode assembly to secure large capacity.

As the diameter of the electrode assembly increases, the pressure applied to a center of the electrode assembly increases during a process of winding a separator and electrodes at high speed, and thus a diameter of a core needs be enlarged to withstand high pressure. However, expanding the core diameter leads to a decrease in the capacity of the rechargeable battery. In addition, the volume of the electrode assembly increases during charging, and as the diameter of the electrode assembly increases, the pressure due to expansion increases. This may cause deformation or cracks in the electrode assembly, which may lead to an internal short circuit of the rechargeable battery.

### SUMMARY

The invention is defined by the appended claims. The description that follows is subjected to this limitation. Any disclosure lying outside the scope of said claims is only intended for illustrative as well as comparative purposes.

One or more embodiments include an electrode assembly that implements large capacity by enlarging a diameter of an electrode assembly to prevent capacity reduction due to a core, and additionally prevents internal short circuit by suppressing deformation or crack of the electrode assembly due to pressure during expansion, and a rechargeable battery provided with the electrode assembly.

According to one or more embodiments an electrode assembly includes a first electrode assembly having a first plurality of windings of a first laminate, the first laminate including a first electrode, a separator, and a second electrode, a middle portion surrounding the first electrode assembly and a second electrode assembly that surrounds the middle portion, the second electrode assembly having a second plurality of windings of a second laminate, the second laminate including a first electrode, a separator and a second electrode, wherein the middle portion may be configured to adjust a gap between the first electrode assembly and the second electrode assembly according to pressure changes.

The middle portion may be configured to actively change the width of the gap between the first electrode assembly and the second electrode assembly by changing its own width depending on the applied pressure. In other words, while contacting the first electrode assembly and the second electrode assembly with both sides of the middle portion, respectively, the middle portion may be configured, to adapt a width of the middle portion and to maintain the contact.

One or more embodiments include an electrode assembly, the electrode assembly including a first electrode assembly having a first plurality of windings of a first laminate, the first laminate including a first electrode, a separator, and a second electrode, a middle portion surrounding the first electrode assembly, and a second electrode assembly that surrounds the middle portion, the second electrode assembly having a second plurality of windings of a second laminate, the second laminate including a first electrode, a separator and a second electrode, wherein the first laminate and the second laminate are disposed separately from each other, and the middle portion may be integrally connected with one of the first laminate and the second laminate.

In general, rechargeable batteries tend to enlarge the diameter of the electrode assembly to secure large capacity. However, simply enlarging the diameter of the electrode assembly increases the pressure applied to the center of the electrode assembly during the process of winding the laminate at high speed, and thus the diameter of the core may be enlarged to withstand high pressure. However, expanding the core diameter causes a decrease in the capacity of the rechargeable battery. In the electrode assembly according to the invention the first laminate and the second laminate are not connected to each other, but are wound separately and may be then combined. Therefore, the pressure generated while winding the second laminate does not affect the first electrode assembly. As a result, the electrode assembly may be advantageous in securing large capacity by expanding the entire diameter, and there is no decrease in capacity due to the expansion of the diameter of the first electrode assembly.

Furthermore, the configuration of the middle portion and the separate arrangement of the first laminate and the second laminate enable compensation for expansion during operation.

The first plurality of windings may surround a first core, the second plurality of windings may surround a second core and the second core may be configured to be removable such that the first electrode assembly and the middle portion may be disposed in an empty space in a center of the second electrode assembly where the second core is removed. In other words, the second core may be removable such that by removing the second core the empty space in a center of the second electrode assembly is provided in which the first electrode assembly and the middle portion may be disposable such that the second electrode assembly surrounds the middle portion according to the invention.

The first laminate may comprise a stacking structure having the first electrode, a first separator, the second electrode and a second separator, the middle portion may include a multi-layered separator that may be integrally connected with the first separator and the second separator included in the first laminate, and the first electrode assembly may have a plurality of windings of the multi-layered separator. In other words, the middle portion may comprise multiple windings of the multi-layered separator that may surround the first electrode assembly. The middle portion may include the two or more-layered separators wound one or more times. The middle portion may include a two-layered separator. The middle portion may include a two-layered separator, and the two-layered separator may be connected to two separators belonging to the first laminate.

The middle portion may include an adhesive tape, the adhesive tape covering an end of the first laminate and the first electrode assembly may have multiple windings of the adhesive tape. In other words, the middle portion may comprise multiple windings of the adhesive tape that may surround the first electrode assembly.

A thickness of the adhesive tape may be equal to or greater than a thickness of the separators included in the first and/or the second laminates, respectively. The middle portion formed of the adhesive tape may cover an outer edge of the first laminate to prevent the first laminate from unwinding. Therefore, in a process of inserting the first electrode assembly and the middle portion into a second electrode assembly from which a second core has been removed, the assembling can be facilitated.

The first plurality of windings may surround a first core, or in other words, a first core may have the plurality of windings of the first laminate, and the middle portion may surround a second core, the second plurality of windings may surround the middle portion, or in other words, the middle portion may have the plurality of windings of the second laminate, and the second core may be configured to be removable such that the first electrode assembly may be disposed in an empty space in a center of the middle portion where the second core is removed. In other words, the first laminate may have the plurality of windings that may surround the first core, the second laminate may have the plurality of windings that may surround the middle portion which may surround the second core, that may be removable. In other words, the second core may be removable such that by removing the second core the empty space in a center of the middle portion is provided in which the first electrode assembly may be disposable such that middle portion and the second electrode assembly surrounds the first electrode assembly according to the invention.

The second laminate may comprise a stacking structure having the first electrode, a first separator, the second electrode and a second separator, the middle portion may include a multi-layered separator integrally connected to the first separator and the second separator included in the second laminate, and the second core may have a plurality of windings of the multi-layered separator. In other words, the middle portion may comprise multiple windings of the multi-layered separator that may surround the second core. The middle portion may include the two or more-layered separators wound one or more times. The middle portion may include a two-layered separator. The middle portion may include a two-layered separator, and the two-layered separator may be connected to two separators belonging to the second laminate.

Embodiments include an electrode assembly, the electrode assembly including a first electrode assembly having a first plurality of windings of a first laminate, the first laminate including a first electrode, a separator, and a second electrode, a middle portion surrounding the first electrode assembly, and a second electrode assembly that surrounds the middle portion, the second electrode assembly having a second plurality of windings of a second laminate, the second laminate including a first electrode, a separator and a second electrode, wherein the first laminate and the second laminate are disposed separately from each other, and the middle portion may be integrally connected with one of the first laminate and the second laminate.

The first laminate may be a stacking structure having the first electrode, a first separator, the second electrode and a second separator, and the middle portion may include a multi-layered separator integrally connected with the first separator and the second separator included in the first laminate.

A number of the plurality of windings of the multi-layered separator of the middle portion may be between 1 and 10 times, preferably between 1 and 7 times, and particularly preferably between 1 and 3 times. The number of multiple windings means how often the corresponding component has a complete winding, where a complete winding is a revolution around the entire circumference of a wrapped body or a complete 360° winding. If the number of turns of the middle portion is one or more, the middle portion may surround the entire outer surface of, for example, the first electrode assembly. As the number of turns of the middle portion increases, a gap control function becomes better, but the capacity of the electrode assembly decreases. If the number of turns of the middle portion is 3 or less, the capacity of the electrode assembly may be increased while implementing an appropriate gap adjustment function.

The first plurality of windings may surround a first core, or in other words the first electrode assembly may further include a first core having a plurality of windings of the first laminate, wherein the first electrode assembly has multiple windings of the multi-layered separator. In other words, the middle portion may have multiple windings of the multi-layered separator that may surround the first electrode assembly.

The second laminate may be a stacking structure of the first electrode, a first separator, the second electrode, and a second separator, and the middle portion may include a multi-layered separator integrally connected with the first separator and the second separator included in the second laminate. In other words, the middle portion may comprise multiple windings of the multi-layered separator which may be surround by the second core. The middle portion may include the two or more-layered separators wound one or more times. The middle portion may include a two-layered separator. The middle portion may include a two-layered separator, and the two-layered separator may be connected to two separators belonging to the second laminate.

The second electrode assembly may further include a second core having a plurality of windings of the multi-layered separator, wherein the second plurality of windings may surround the middle portion, or in other words, the middle portion has a plurality of windings of the second laminate, and wherein the second core may be configured to be removable such that the first electrode assembly may be disposed in an empty space in a center of the middle portion where the second core is removed.

The second electrode of each of the first laminate and the second laminate may include a second substrate and a second composite material layer disposed on the second substrate, and the second composite material layer of the first laminate and the second composite material layer of the second laminate are different in at least one of silicon content and density.

The second electrode assembly may have an N/P ratio that is smaller than a N/P ratio of the first electrode assembly. The N/P ratio is the capacity of the second electrode divided by the capacity of the first electrode, and a typical rechargeable battery has an N/P ratio greater than 1.

According to one more embodiments a rechargeable battery includes an electrode assembly according to one or more embodiments, a can that accommodates the electrode assembly in an inner space thereof and a cap plate that is coupled to an end of an open side of the can and seals the can, wherein the electrode assembly includes the first electrode assembly having the plurality of windings of the first laminate, the middle portion surrounding the first electrode assembly, and the second electrode assembly having the plurality of windings of the second laminate, and wherein the middle portion may be configured to adjust a gap between the first electrode assembly and the second electrode assembly according to pressure changes.

The first electrode assembly and the second electrode assembly may each include a first uncoated region extended to one side and a second uncoated region extended to one other, opposite, side, and each of the first uncoated region and the second uncoated region may be bent toward a center of the first electrode assembly, and the first uncoated region of the second electrode assembly may be in contact with the first uncoated region of the first electrode assembly, and the second uncoated region of the second electrode assembly may be in contact with the second uncoated region of the first electrode assembly.

The rechargeable battery may further include a first current collecting plate fixed to the first uncoated region of the electrode assembly, a rivet terminal installed in a terminal hole provided in the can via an insulator and may be coupled to the first current collecting plate and a second current collecting plate fixed to the second uncoated region of the electrode assembly and includes a conductive portion that is in close contact to an interior wall of the can.

According to the embodiments, an electrode assembly is advantageous in securing large capacity by enlarging the entire diameter due to individual winding of the first laminate and second laminate, and capacity reduction due to the core does not occur. In addition, the electrode assembly may suppress the occurrence of deformation or cracks in the electrode assembly by the middle portion even if volume expansion occurs during charging, and can effectively prevent internal short.

In case of the separate assembling enabled by the cores, the pressure generated while winding the second laminate does not affect the first core and the first electrode assembly. As a result, the electrode assembly may be advantageous in securing large capacity by expanding the entire diameter, and there is no decrease in capacity due to the expansion of the diameter of the first core.

### BRIEF DESCRIPTION OF THE DRAWINGS

The accompanying drawings in the present specification show embodiments of the present disclosure, and are illustrated to help further understand the technical concept, aspects and features of the present disclosure together with the detailed description of the present disclosure. Therefore, the present disclosure shall not be interpreted as being defined only by the aspects illustrated in the drawings.
FIG. 1 is a perspective view of an electrode assembly according to a first embodiments.
FIG. 2 is an exploded perspective view of the electrode assembly of FIG. 1 according to first embodiments;
FIG. 3 is a partially enlarged view of a first electrode assembly of the electrode assembly shown in FIG. 2 according to one or more embodiments;
FIG. 4 is a partially enlarged view of a second electrode assembly of the electrode assembly shown in FIG. 2 according to one or more embodiments;
FIG. 5 is a schematic cross-sectional view of the middle portion of the electrode assembly shown in FIG. 1 according to one or more embodiments;
FIG. 6 is a partially enlarged view of FIG. 5 according to one or more embodiments;
FIG. 7 is a partially enlarged cross-sectional view of the electrode assembly that has gone through an uncoated region bending process according to one or more embodiments;
FIG. 8 is an exploded perspective view of an electrode assembly according to a second embodiments.
FIG. 9 is a schematic cross-sectional view of a middle portion of the electrode assembly shown in FIG. 8 according to one or more embodiments;
FIG. 10 is a partially enlarged view of FIG. 9 according to one or more embodiments;
FIG. 11 is a schematic cross-sectional view of a middle portion of an electrode assembly according to third embodiments;
FIG. 12 is a perspective view of a rechargeable battery according to one or more embodiments; and
FIG. 13 is a cross-sectional view of the rechargeable battery shown in FIG. 12 according to one or more embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The present invention will be described more fully hereinafter with reference to the accompanying drawings, in which embodiments of the invention are shown. As those of ordinary skill in the art would realize, the described embodiments may be modified in various different ways, all without departing from the present invention.

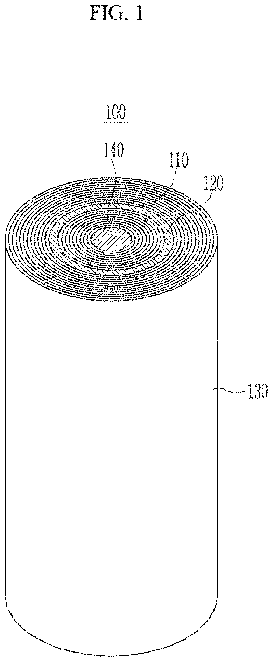

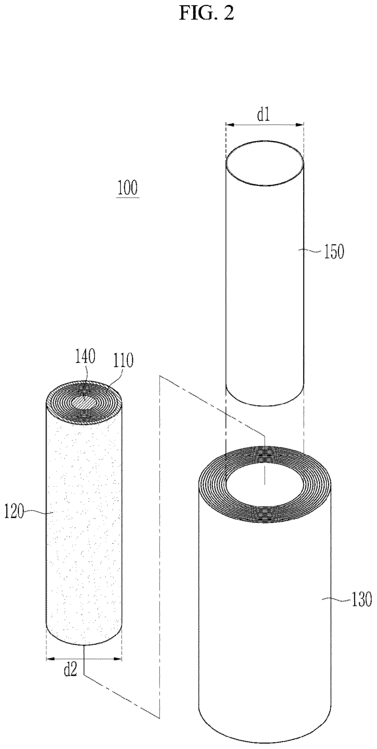

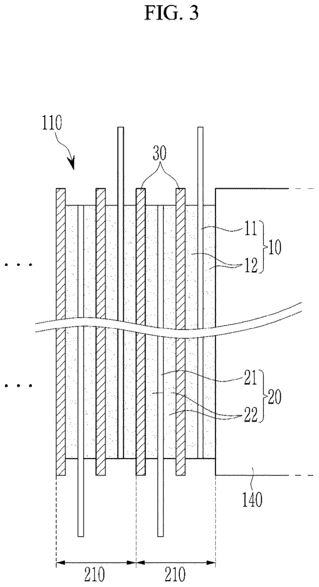

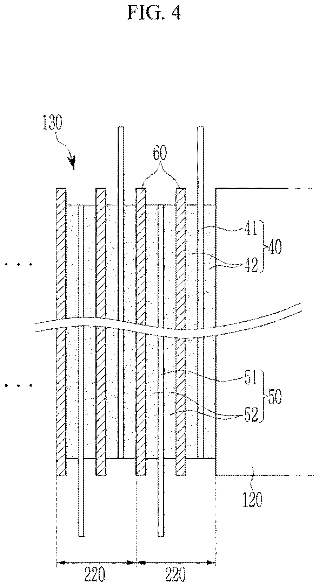

FIG. 1 is a perspective view of an electrode assembly according to first embodiments, and FIG. 2 is an exploded perspective view of the electrode assembly of FIG. 1 according to first embodiments. FIG. 3 is a partially enlarge view of a first electrode assembly of the electrode assembly shown in FIG. 2, and FIG. 4 is a partially enlarged view of a second electrode assembly of the electrode assembly shown in FIG. 2.

Referring to FIGS. 1-4, an electrode assembly 100 according to first embodiments may include a first electrode assembly 110, in which a first laminate 210 may be wound in the form of a jelly roll, a middle portion 120 disposed outside the first electrode assembly 110, and a second electrode assembly 130 disposed outside the middle portion 120 and, in which a second laminate 220 is wound in the form of a jelly roll. The first laminate 210 and the second laminate 220 may be disconnected from each other rather than being connected.

The first electrode assembly 110 may be formed of a band-shaped first laminate 210 wound in a jelly roll shape around a first core 140. The first laminate 210 may include a first electrode 10, a separator 30, a second electrode 20, and a separator 30 that are sequentially stacked, and may be wound, for example, five or more times around the first core 140. In the first laminate 210, the positions of the first electrode 10 and the second electrode 20 may be switched.

The middle portion 120 may be disposed outside the first electrode assembly 110 while surrounding the first electrode assembly 110. The second electrode assembly 130 may be disposed outside the middle portion 120 while surrounding the middle portion 120. In this way, the first electrode assembly 110, the middle portion 120, and the second electrode assembly 130 may be sequentially disposed along the radial direction centered on the first core 140.

The second electrode assembly 130 may be a band-shaped second laminate 220 wound around a second core 150 in a jelly roll form, and the second core 150 may thereafter be removed. The second laminate 220 may include a first electrode 40, a separator 60, a second electrode 50, and a separator 60 that are sequentially stacked, and may be wound, for example, five or more times around the second core 150. In the second laminate 220, the positions of first electrode 40 and second electrode 50 may be switched.

A diameter d1 of the second core 150 and an interior diameter of the second electrode assembly 130 after the second core 150 is removed, may be slightly larger than an exterior diameter d2 of the middle portion 120. After the second core 150 is removed from the second electrode assembly 130, the first electrode assembly 110 and the middle portion 120 may be accommodated in an internal space of the second electrode assembly 130 to form the electrode assembly 100 together with the second electrode assembly 130. In some embodiments, the first core 140 may remain or, in other embodiments, may be removed. The electrode assembly 100 may be accommodated in an inner space of a can, which will be described later, together with an electrolyte solution.

The first electrodes 10 and 40 of the first and second laminates 210 and 220, respectively, may include first substrates 11 and 41, and first composite material layers 12 and 42 may be disposed on the first substrates 11 and 41, respectively. The composite material layers 12 and 42 may be disposed on both sides of the remaining region except for one (upper) edge of first substrates 11 and 41. The second electrodes 20 and 50 of the first and second laminates 210 and 220 respectively may include second substrates 21 and 51 and second composite material layers 22 and 52 disposed on the second substrates 21 and 51. The second composite material layers 22 and 52 may be disposed on both sides of the remaining region except for the other (lower) edge of second substrates 21 and 51.

In a lithium ion rechargeable battery according to one or more embodiments, the first substrates 11 and 41 may include aluminum foil, and the first composite material layers 12 and 42 may include a transition metal oxide such as LiCoO₂, LiNiO₂, LiMn₂O₄, Li(NiCoAl)O₂, LiFePO₄, Li(NiCoMn)O₂, and the like, a conductive material, a binder, and the like. The second substrates 21 and 51 may include, for example, copper foil or nickel foil, and the second composite material layers 22 and 52 may include, for example, graphite, silicon, a conductive material, and a binder. The first electrodes 10 and 40 may be referred to as a positive electrode, and the second electrodes 20 and 50 may be referred to as a negative electrode.

The separators 30 and 60 may be made of a porous material, or may be made of a porous material with a coating layer disposed on at least one side. The porous material may include one or more of polyethylene, polypropylene, polyethylene terephthalate, polypropylene terephthalate, polybutylene terephthalate, polyester, polycarbonate, and polyimide. The coating layer may include a binder and may further include inorganic particles. The binder may include a polyvinylidene fluoride-based compound. The inorganic particles may include one or more of Al₂O₃, BaSO₄, MgO, Mg (OH)₂, SiO₂, TiO₂, ZnO, SnO₂, NiO, and GaO. The separators 30 and 60 may insulate the first electrodes 10 and 40 and the second electrodes 20 and 50 while allowing movement of lithium ions.

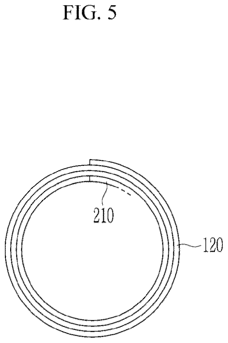

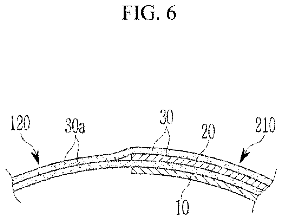

FIG. 5 is a schematic cross-sectional view of the middle portion of the electrode assembly shown in FIG. 1 according to one or more embodiments, and FIG. 6 is a partially enlarged view of FIG. 5 according to one or more embodiments.

Referring to FIG. 1 to FIG. 6, the middle portion 120 may be configured to adjust a gap between the first electrode assembly 110 and the second electrode assembly 130. For this purpose, the middle portion 120 may be made of a material with ductility and elasticity. The middle portion 120 may be configured to actively change the gap between the first electrode assembly 110 and the second electrode assembly 130 by changing its thickness depending on the applied pressure.

The middle portion 120 may include a two or more-layered separator 30a, and may include the two or more-layered separators 30a wound one or more times. For example, the middle portion 120 may include a two-layered separator 30a, and the two-layered separator 30a may be connected to two separators 30 belonging to the first laminate 210.

In some embodiments, the two separators 30 belonging to the first laminate 210 may extend outward beyond the first electrode 10 and the second electrode 20 to form the separator 30a of the middle portion 120. The middle portion 120 may comprise or may be formed of the separator 30a and has excellent electrolyte solution impregnation and changes in thickness quickly according to pressure changes, and thus it is advantageous for precisely controlling the gap between the first and second electrode assemblies 110 and 130.

The number of turns of the middle portion 120 may be, for example, between 1 and 10 times, and preferably between 1 and 3 times. If the number of turns of the middle portion 120 is one or more, the middle portion 120 may surround the entire outer surface of the first electrode assembly 110. As the number of turns of the middle portion 120 increases, a gap control function becomes better, but the capacity of the electrode assembly decreases. If the number of turns of the middle portion 120 is 3 or less, the capacity of the electrode assembly 100 may be increased while implementing an appropriate gap adjustment function.

In general, rechargeable batteries tend to enlarge the diameter of the electrode assembly to secure large capacity. However, simply enlarging the diameter of the electrode assembly increases the pressure applied to the center of the electrode assembly during the process of winding the laminate at high speed, and thus the diameter of the core may be enlarged to withstand high pressure. However, expanding the core diameter causes a decrease in the capacity of the rechargeable battery.

In the electrode assembly 100 of FIGS. 1-7, the first laminate 210 and the second laminate 220 are not connected to each other, but are wound separately around their respective cores (first core 140 and second core 150) and then combined. Therefore, the pressure generated while winding the second laminate 220 does not affect the first core 140 and the first electrode assembly 110. As a result, the electrode assembly 100 of FIGS. 1-7 may be advantageous in securing large capacity by expanding the entire diameter, and there is no decrease in capacity due to the expansion of the diameter of the first core 140.

In addition, in a typical rechargeable battery, the electrode assembly may undergo repeated volume changes that expand during charging and contract during discharge due to the secondary composite material layer, and as the diameter of the electrode assembly increases, the pressure applied to the center of the electrode assembly increases due to expansion. As a result, deformation such as folding or cracks may occur in the electrode assembly, which may lead to an internal short circuit of the rechargeable battery.

In the electrode assembly 100 of FIGS. 1-7, the middle portion 120 may be disposed between the first electrode assembly 110 and the second electrode assembly 130. In the rechargeable battery, since the second electrode assembly 130 may be blocked from expansion toward the outside by the can, it expands toward the inside, and if the first core 140 is present, the first electrode assembly 110 expands toward the outside. The middle portion 120 may contract due to the pressure generated during the expansion of the first and second electrode assemblies 110 and 130 to relieve the pressure caused by the expansion.

Therefore, the electrode assembly 100 of FIGS. 1-7 may suppress the occurrence of deformation or cracks due to pressure even if volume expansion occurs during charging, and may effectively prevent internal short circuit of the rechargeable battery.

In the electrode assembly 100 of the above-described configuration, the second composite material layer 22 of the first laminate 210 and the second composite material layer 52 of the second laminate 220 may be manufactured to have different expansion characteristics. For example, the second composite material layer 22 of the first laminate 210 and the second composite material layer 52 of the second laminate 220 may be manufactured differently in at least one of silicon content and density. In general, the silicon content and density of the second composite material layers 22 and 52 may be in a proportional relationship with the degree of expansion if charged.

Since the inner portion of the second electrode assembly 130 facing the middle portion 120 is not mechanically fixed to a specific portion, the inner portion of the second electrode assembly 130 may be deformed or cracked upon expansion along the length direction (circumferential direction) of the second laminate 220. If expansion along the length direction (circumference direction) of second laminate 220 needs to be suppressed, the second composite material layer 52 of the second laminate 220 may have a lower silicon content than the second composite material layer 22 of the first laminate 210 or may have lower density than the second composite material layer 22 of the first laminate 210.

In some embodiments, if the first core 140 is removed, the first electrode assembly 110 may have an empty space inside. In this case, wrinkles or cracks may occur at an inner end of the first electrode assembly 110 if the first electrode assembly 110 expands. If the expansion of the first electrode assembly 110 needs to be suppressed, the second composite material layer 22 of the first laminate 210 may have a lower silicon content than the second composite material layer 52 of the second laminate 220 or may have lower density than the second composite material layer 52 of the second laminate 220.

The difference in silicon content of the second composite material layers 22 and 52 or the density of the second composite material layers 22 and 52 is not limited to the above examples, and if the degree of expansion of a specific portion needs to be controlled according to the position characteristics of the electrode assembly 100, the silicon content of the second composite material layers 22 and 52 or the density of the second composite material layers 22 and 52 can be adjusted in various ways.

In addition, in the electrode assembly 100 of the above-described configuration, the first electrode assembly 110 and the second electrode assembly 130 may be manufactured to have different N/P ratios. The N/P ratio is the capacity of the second electrode divided by the capacity of the first electrode, and a typical rechargeable battery has an N/P ratio greater than 1. As the diameter of the electrode assembly increases to secure large capacity of the rechargeable battery, the N/P ratio needs to be increased to balance the first electrode and the second electrode at the inner edge (edge where winding begins) and the outer edge (edge where winding ends).

In the electrode assembly 100 of FIGS. 1-7, the first electrode assembly 110 and the second electrode assembly 130 may be separated from each other and have their own inner edge and outer edge. Therefore, the second electrode assembly 130 does not need to have the same N/P ratio as the first electrode assembly 110, and may have an N/P ratio smaller than that of the first electrode assembly 110. This has the effect of reducing the amount of active material used throughout the electrode assembly 100.

The electrode assembly 100 of FIGS. 1-7 may include an uncoated region bending structure to increase current collecting efficiency.

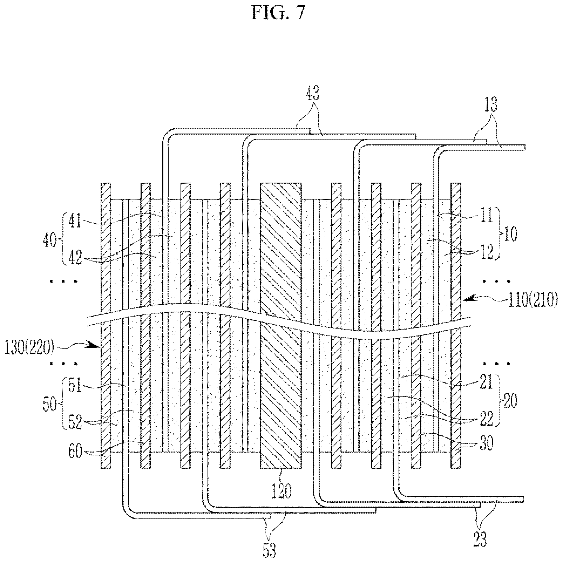

FIG. 7 is a partially enlarged cross-sectional view of the electrode assembly that has gone through an uncoated region bending process according to one or more embodiments.

Referring to FIG. 7, portions of the first substrates 11 and 41 of the first electrodes 10 and 40, which are uncovered by the first composite material layers 12 and 42, may be referred to as first uncoated regions 13 and 43, and portions of the second substrates 21 and 51 of the second electrodes 20 and 50 uncovered by the second composite material layers 22 and 52 may be referred to as second uncoated regions 23 and 53. In the electrode assembly 100, the first uncoated regions 13 and 43 and the second uncoated regions 23 and 53 may be disposed on opposite sides (upper and lower sides of FIG. 7).

After the first electrode assembly 110 and the middle portion 120 are accommodated in the inner space of the second electrode assembly 130, the first uncoated regions 13 and 43 may be bent inward toward the first core (not shown) and thus may be overlapped with neighboring first uncoated regions 13 and 43. The second uncoated regions 23 and 53 may also bend inward toward the first core and overlap with neighboring second uncoated regions 23 and 53. A plurality of cutout lines may be positioned in the first and second uncoated regions 13, 43, 23, and 53 such that the first and second uncoated regions 13, 43, 23, and 53) can be easily bent (e.g., where the bend is desired). The first uncoated regions 13 and 43 and the second uncoated regions 23, and 53 each may be overlapped and pressed by bending to form a flat surface.

In this case, the first uncoated region 43 of the second electrode assembly 130 may contact the first uncoated region 13 of the first electrode assembly 110, and the second uncoated region 53 of the second electrode assembly 130 may contact the second uncoated region 23 of the first electrode assembly 110. In this case, the first electrodes 10 and 40 of the first and second electrode assemblies 110 and 130 may be electrically conducted, and the second electrodes 20 and 50 of the first and second electrode assemblies 110 and 130 may be electrically conducted.

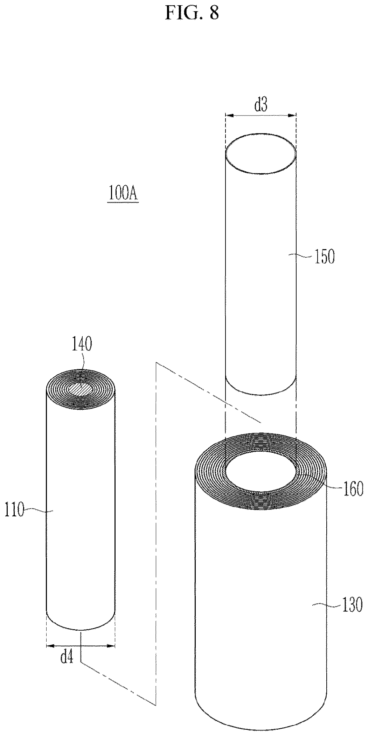

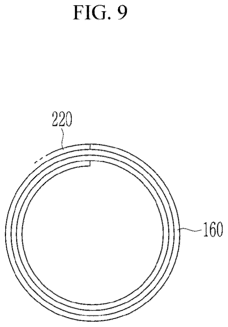

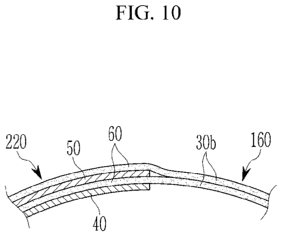

FIG. 8 is an exploded perspective view of an electrode assembly according to a second embodiments, FIG. 9 is a schematic cross-sectional view of a middle portion of the electrode assembly shown in FIG. 8 according to one or more embodiments, and FIG. 10 is a partially enlarged view of FIG. 9 according to one or more embodiments. In some embodiments, the electrode assembly may have the same or similar configuration as the embodiment of FIGS. 1-7 described above, except for the contents described below.

Referring to FIG. 8 to FIG. 10, a first electrode assembly 110 may be formed by winding a first laminate 210 around a first core 140 in a jelly roll form. The middle portion 160 and the second electrode assembly 130 may be formed by winding at least two-layered separator 30b and a second laminate 220 around a second core 150 in a jelly roll form, and then removing the second core 150.

A diameter d3 of the second core 150 and an interior diameter of the middle portion 160 after the second core 150 is removed may be slightly larger than an exterior diameter d4 of the first electrode assembly 110. After the second core 150 is removed from the middle portion 160 and the second electrode assembly 130, the first electrode assembly 110 may be accommodated in an inner space of the middle portion 160, thereby forming an electrode assembly 100A together with the middle portion 160 and the second electrode assembly 130.

The middle portion 160 may be formed of a two-layered separator 30b, and the two-layered separator 30b may be connected to two separators 60 belonging to the second laminate 220. That is, the two separators 60 belonging to the second laminate 220 may extend inward beyond the first electrode 40 and the second electrode 50 to form the separator 30b of the middle portion 160.

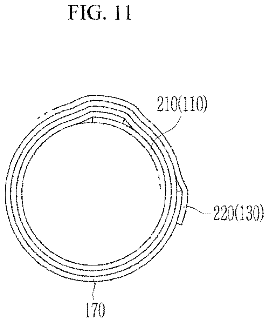

FIG. 11 is a schematic cross-sectional view of a middle portion of an electrode assembly according to a third embodiments. The electrode assembly of FIG. 11 may have the same or similar configuration as the first embodiments of FIGS. 1-7 described above, except for the contents described below.

Referring to FIG. 11, a middle portion 170 may include an adhesive tape, and the adhesive tape may be wound one or more times around a first electrode assembly 110. The adhesive tape may be formed of a polymer film with an adhesive material applied to the surface, for example, films such as polyimide (PI), polyethylene terephthalate (PET), and an oriented polystyrene (OPS).

A thickness of the adhesive tape may be equal to or greater than thicknesses of separators 30 and 60 included in first and second laminates 210 and 220. The middle portion 170 formed of the adhesive tape may cover an outer edge (edge where winding ends) of the first laminate 210 to prevent the first laminate 210 from unwinding. Therefore, in a process of inserting the first electrode assembly 110 and the middle portion 170 into a second electrode assembly 130 from which a second core (not shown) has been removed, the assembling can be facilitated.

In the case of the first embodiments of FIGS. 1-7 described above, the middle portion 120 may be connected to the first laminate 210 and may be disposed disconnected from the second laminate 220. In this case, the outer edge of the middle portion 120 and the inner edge of the second laminate 220 may be offset from each other. In the second embodiments of FIGS. 8-10, the middle portion 160 may be connected to the second laminate 220 and may be disposed disconnected from the first laminate 210. In this case, the outer edge of the first laminate 210 and the inner edge of the middle portion 160 may be offset from each other. In the third embodiments of FIG. 11, the middle portion 170 may be disposed disconnected from both the first laminate 210 and the second laminate 220.

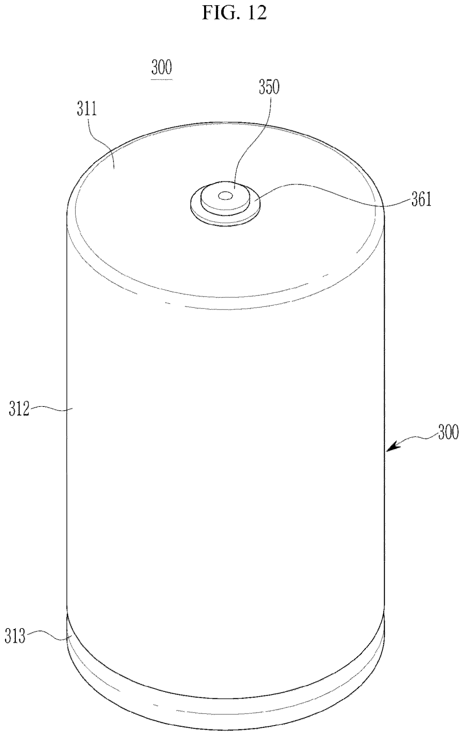

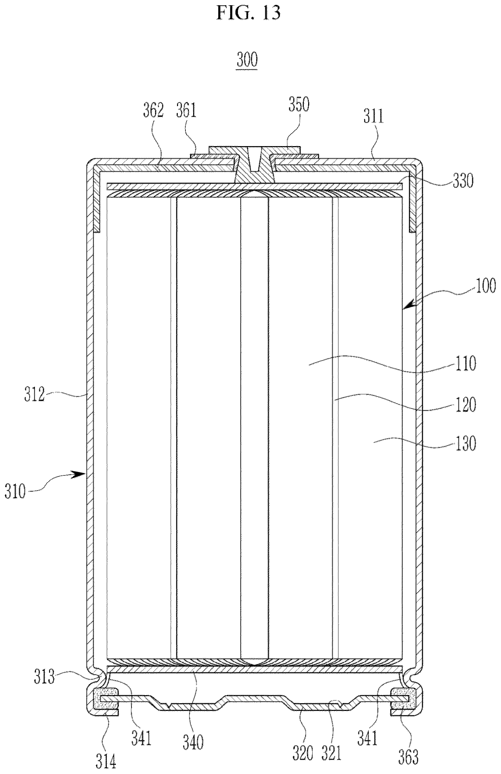

FIG. 12 is a perspective view of a rechargeable battery according to one or more embodiments, and FIG. 13 is a cross-sectional view of the rechargeable battery shown in FIG. 12 according to one or more embodiments. A rechargeable battery according to one or more embodiments may include the electrode assembly of one of the embodiments described above.

Referring to FIG. 12 and FIG. 13, a rechargeable battery 300 according to one or more embodiments may include an electrode assembly 100, a can 310 accommodating the electrode assembly 100 in an inner space, and a cap plate 320 coupled to an end of an open side (e.g., the bottom in the orientation of FIG. 13) of the can 310 and seals the can 310. The rechargeable battery 300 may further include a first current collecting plate 330, a second current collecting plate 340, and a rivet terminal 350.

The can 310 may have a shape with one side open (e.g., the lower side in the orientation of FIG. 13) such that the electrode assembly 100 can be inserted. The can 310 may include a disc-shaped top portion 311 and a cylinder-shaped side portion 312 connected to an edge of the top portion 311. The top portion 311 may be referred to as, for example, a bottom portion if an orientation of the top and bottom of the rechargeable battery 300 is changed. The can 310 may be made of steel, stainless steel, aluminum, or an aluminum alloy.

A terminal hole may be disposed in a center of the top portion 311, and the rivet terminal 350 may be installed in the terminal hole through a first insulator 361. The first current collecting plate 330 may be fixed to first uncoated regions 13 and 43 of the electrode assembly 100, and the second current collecting plate 340 may be fixed to the second uncoated regions 23 and 53 of the electrode assembly 100. The rivet terminal 350 may be combined with the first current collecting plate 330, and may be charged to the same polarity as first electrodes 10 and 40 by the first current collecting plate 330 and function as a first terminal (e.g., a positive terminal).

The first insulator 361 may insulate the rivet terminal 350 and the top portion 311 and may seal the terminal hole to prevent leakage of the electrolyte solution. In some embodiments, a second insulator 362 may be disposed between an inner surface of the top portion 311 and the first current collecting plate 330 to insulate the top portion 311 and the first current collecting plate 330.

The cap plate 320 may be disposed on the outside (e.g., the lower side) of the second current collecting plate 340 and may be coupled to an end of a side portion 312 via a third insulator 363. A notch groove 321 may be disposed on an inner surface of the cap plate 320. The notch groove 321 may have a V-shaped cross-section and may have a circular arc shape on a plane (if viewing the target object from above).

The internal temperature of a rechargeable battery may rise due to various causes such as rapid charge and discharge, external impact, and exposure to a high temperature environment, and the internal pressure may rise due to gasification of the electrolyte solution, and the like. If the internal pressure of the rechargeable battery 300 increases, the cap plate 320 may break around the notch groove 321 and internal gas may be discharged.

The side portion 312 of the can 310 may include a beading portion 313 and a crimping portion 314. The beading portion 313 may be a portion of the side portion 312 deformed concavely toward the inside of the side portion 312, and the crimping portion 314 may be a portion where an end of the side portion 312 is bent vertically toward the inside of the side portion 312.

An edge of the cap plate 320 may be pressed between the beading portion 313 and the crimping portion 314 via the third insulator 363, and the cap plate 320 may be firmly fixed to the end of the side portion 312 by the beading portion 313 and the crimping portion 314. The cap plate 320 is insulated from the first electrodes 10 and 40 and the second electrodes 20 and 50 and may be electrically non-polar.

The second current collecting plate 340 may include a conductive portion 341 in close contact with an inner surface of the beading portion 313. The conductive portion 341 may be provided in plural numbers along an edge of the second current collecting plate 340. The can 310 may be charged to the same polarity as the second electrodes 20 and 50 by the conductive portion 341 and may function as a second terminal (e.g., a negative terminal). The rechargeable battery 300 may be provided in plural, and the plurality of rechargeable batteries may be connected by a bus bar (not shown) to form a battery module system.

The rechargeable battery 300 may increase capacity by enlarging the diameters of the electrode assembly 100 and the can 310, and suppresses deformation or cracks due to pressure during expansion of the electrode assembly 100 by using the middle portion 120 of the electrode assembly 100, and thus internal short circuits can be prevented, thereby improving long-term durability.

The present invention provides an electrode assembly that implements large capacity by enlarging a diameter of an electrode assembly to prevent capacity reduction due to a core, and prevents internal short circuits by suppressing deformation or crack of the electrode assembly due to pressure during expansion, and a rechargeable battery provided with the electrode assembly.

## Claims

1. An electrode assembly (100, 100A), comprising:
a first electrode assembly (110) having a first plurality of windings of a first laminate (210), the first laminate (210) including a first electrode (10), a separator (30), and a second electrode (20);
a middle portion (120, 160, 170) surrounding the first electrode assembly (110); and
a second electrode assembly (130) that surrounds the middle portion (120, 160), the second electrode assembly (130) having a second plurality of windings of a second laminate (220), the second laminate (220) including a first electrode (40), a separator (60) and a second electrode (50),
wherein the middle portion (120, 160, 170) is configured to adjust a gap between the first electrode assembly (110) and the second electrode assembly (130) according to pressure changes, and/or wherein
the first laminate (210) and the second laminate (220) are disposed separately from each other, and the middle portion (120, 160, 170) is integrally connected with the first laminate (210) or the second laminate (220).

2. The electrode assembly (100, 100A) as claimed in claim 1, wherein:
the first plurality of windings surrounds a first core (140),
the second plurality of windings surrounds a second core (150), and wherein
the second core (150) is configured to be removable such that the first electrode assembly (110) and the middle portion (120, 160) are disposed in an empty space in a center of the second electrode assembly (130) where the second core (150) is removed.

3. The electrode assembly (100, 100A) as claimed in claim 1 or 2, wherein:
the middle portion (120, 160, 170) includes an adhesive tape, and
the adhesive tape covers an end of the first laminate (210) and the first electrode assembly (110) has multiple windings of the adhesive tape.

4. The electrode assembly (100, 100A) as claimed in any one of claims 1 to 3, wherein:
the first laminate (210) comprises a stacking structure having the first electrode (10), a first separator (30), the second electrode (20) and a second separator (30), and
the middle portion (120, 160, 170) includes a multi-layered separator (30a) integrally connected with the first separator (30) and the second separator (30) included in the first laminate (210).

5. The electrode assembly (100, 100A) as claimed in claim 4, wherein
the first plurality of windings surrounds a first core (140), wherein the first electrode assembly (110) has a plurality of windings of the multi-layered separator (30a).

6. The electrode assembly (100, 100A) as claimed in claim 1, wherein:
the first plurality of windings surrounds a first core (140),
the middle portion (120, 160, 170) surrounds a second core (150),
the second plurality of windings surrounds the middle portion (120, 160, 170), and wherein
the second core (150) is configured to be removable such that the first electrode assembly (110) is disposed in an empty space in a center of the middle portion (120, 160, 170) where the second core (150) is removed.

7. The electrode assembly (100, 100A) as claimed in claim 1 or 6, wherein:
the second laminate (220) comprises a stacking structure having the first electrode (30), a first separator (60), the second electrode (50), and a second separator (40), and
the middle portion (120, 160, 170) includes a multi-layered separator (30b) integrally connected with the first separator (60) and the second separator (60) included in the second laminate.

8. The electrode assembly (100, 100A) as claimed in claim 7, further comprising a second core (150) having a plurality of windings of the multi-layered separator (30b), wherein
the second plurality of windings surrounds the middle portion (120, 160, 170), and wherein
the second core (150) is configured to be removable such that the first electrode assembly (110) is disposed in an empty space in a center of the middle portion (120, 160, 170) where the second core (150) is removed.

9. The electrode assembly (100, 100A) as claimed in any one of claims 1 to 8, wherein:
the first laminate (210) comprises a stacking structure having the first electrode (10), a first separator (30), the second electrode (20), and a second separator (30), and the middle portion (120, 160, 170) includes a multi-layered separator (30a) that is integrally connected with the first separator (30) and the second separator (30) included in the first laminate (210), and the first electrode assembly (110) has a plurality of windings of the multi-layered separator (30a), or
the second laminate (220) comprises a stacking structure having the first electrode (40), a first separator (60), the second electrode (50) and a second separator (60), and the middle portion (120, 160, 170) includes a multi-layered separator (30b) integrally connected to the first separator (60) and the second separator (60) included in the second laminate (220), and the second core (150) has a plurality of windings of the multi-layered separator (30b).

10. The electrode assembly (100, 100A) as claimed in any one of claims 1 to 9, wherein:
the second electrode (20, 50) of each of the first laminate (210) and the second laminate (220) includes a second substrate (21, 51) and a second composite material layer (22, 52) disposed on the second substrate (21, 51), and
the second composite material layer (22, 52) of the first laminate (210) and the second composite material layer (22, 52) of the second laminate (220) are different in at least one of silicon content and density.

11. The electrode assembly (100, 100A) as claimed in any one of claim 1 to 10, wherein the second electrode assembly (130) has an N/P ratio that is smaller than a N/P ratio of the first electrode assembly (110).

12. A rechargeable battery (300) comprising:
an electrode assembly (100, 100A) according to any one of the preceding claims;
a can (310) that accommodates the electrode assembly (100, 100A) in an inner space thereof; and
a cap plate (320) that is coupled to an end of an open side of the can (310) and seals the can (310), wherein
the electrode assembly (100, 100A) includes the first electrode assembly (110) having the plurality of windings of the first laminate (210), the middle portion (120, 160, 170) surrounding the first electrode assembly (110), and the second electrode assembly (130) having the plurality of windings of the second laminate (220), and wherein
the middle portion (120, 160, 170) is configured to adjust the gap between the first electrode assembly (110) and the second electrode assembly (130) according to pressure changes, or wherein the first laminate (210) and the second laminate (220) are disposed separately from each other, and the middle portion (120, 160, 170) is integrally connected with one the first laminate (210) or the second laminate (220).

13. The rechargeable battery (300) as claimed in claim 12, wherein:
the first electrode assembly (110) and the second electrode assembly (130) each includes a first uncoated region (13, 43) extended to one side and a second uncoated region (23, 53) extended to one other side, and each of the first uncoated region (13, 43) and the second uncoated region (23, 53) is bent toward a center of the first electrode assembly (110), and
the first uncoated region (43) of the second electrode assembly (130) is in contact with the first uncoated region (13) of the first electrode assembly (110), and the second uncoated region (53) of the second electrode assembly (130) is in contact with the second uncoated region (23) of the first electrode assembly (110).

14. The rechargeable battery (300) as claimed in claim 13, further comprising:
a first current collecting plate (330) fixed to the first uncoated region (13, 43) of the electrode assembly (100, 100A);
a rivet terminal (350) installed in a terminal hole provided in the can (310) via an insulator (361) and is coupled to the first current collecting plate (330); and
a second current collecting plate (340) fixed to the second uncoated region (23, 53) of the electrode assembly (100, 100A) and includes a conductive portion (341) that is in close contact to an interior wall of the can (310).

15. A method of assembling an electrode assembly (100, 100A) according to any one of the preceding claims, comprising the following steps:
providing a first electrode assembly (110) having a first plurality of windings of a first laminate (210), the first laminate (210) including a first electrode (10), a separator (30), and a second electrode (20), wherein the first plurality of windings surrounds a first core (140);
providing a middle portion (120, 160, 170);
providing a second electrode assembly (130) having a second plurality of windings of a second laminate (220), the second laminate (220) including a first electrode (40), a separator (60) and a second electrode (50), wherein the second plurality of windings surrounds a second core (150);
removing the second core (150) to form an empty space in a center of the second electrode assembly (130) or to form an empty space in a center of the middle portion (120, 160, 170); and
disposing the first electrode assembly (110) and the middle portion (120, 160, 170) in the empty space in the center of the second electrode assembly (130) or disposing the first electrode assembly (110) in the empty space in the center of the middle portion (120, 160, 170);
wherein after the disposing the middle portion (120, 160, 170) surrounds the first electrode assembly (110) and the second electrode assembly (130) surrounds the middle portion (120, 160), and
wherein the middle portion (120, 160, 170) is configured to adjusts a gap between the first electrode assembly (110) and the second electrode assembly (130) according to pressure changes, or wherein the first laminate (210) and the second laminate (220) are disposed separately from each other, and the middle portion (120, 160, 170) is integrally connected with one the first laminate (210) or the second laminate (220).
